# EUROPEAN PATENT APPLICATION

(11) **EP 2 123 923 A1**
(43) Date of publication of application: **25.11.2009**
(21) Application number: 09001520.7
(22) Date of filing: 04.02.2009
(51) Int. Cl.: F16C 33/10

(54) **Self-lubricating bearing structure**

(30) Priority: 08.05.2008 TW 97117059
(71) Applicant: Newcera Technology Co., Ltd., Hsinchu City (TW)
(72) Inventor: Liu, Han-Ching, Sijhih City, Taipei County (TW); Tung, Chao-Nien, Hsinchu City (TW); Huang, Lung-Wei, Hsinchu City (TW)
(74) Representative: Glawe, Delfs, Moll

(57) **Abstract**

A self-lubrication bearing structure includes a bearing, which is made from a porous material capable of absorbing and transferring a lubricating oil and which has a center axle hole for the passing of the shaft of a motor and multiple oil retaining grooves that retain a lubricating oil, and a casing surrounds the bearing around the shaft of the motor. During rotation of the shaft, the lubricating oil is caused to move out of the porous structure of the bearing to lubricate the shaft. When the rotation of the shaft is stopped, the lubricating oil flows back to the oil retaining grooves.

## Description

This application claims the priority benefit of Taiwan patent application number 097117059 filed on May 8, 2008.

### BACKGROUND OF THE INVENTION

### 1. Field of the Invention:

The present invention relates to bearing means for supporting the rotation of the shaft of the motor and more particularly, to a self-lubrication bearing structure that lubricates the shaft of the motor automatically during rotation of the shaft, and recycles the lubricating oil when the rotation of the shaft of the motor is stopped.

### 2. Description of the Related Art:

To permit constrained relative rotation between two parts, a bearing is usually used. However, rotation of a mechanical part in a bearing causes friction that causes heat. To maintain normal function of a bearing for a long period of time, a lubricant, such as water, lubricating oil or grease may be used. However, it is inconvenient to regularly apply a lubricant to a bearing. To eliminate this problem, self-lubrication bearings are created. These self-lubricating bearings commonly have a wick structure for retaining a lubricant.

During rotation of the mechanical part, the lubricant retained in the self-lubrication bearing that supports the mechanical part leaks out of the self-lubrication bearing to lubricate the mechanical part. When the rotary motion of the mechanical part is stopped, the self-lubrication bearing absorbs the lubricant back to its internal wick structure. However, when the rotary motion of the mechanical part is stopped, not all the lubricant that leaked out of the self-lubrication bearing is recycled. A certain part of the lubricant is evaporated or thrown away, causing loss. Therefore, the self-lubrication functioning of regular self-lubrication bearing deteriorates with use, and the work life is shortening.

Therefore, it is desirable to provide a self-lubrication bearing that eliminates the aforesaid problem.

### SUMMARY OF THE INVENTION

The present invention has been accomplished under the circumstances in view. It is one object of the present invention to provide a self-lubrication bearing, which exhibits excellent lubricant supplying and retaining effects, prolonging the work life. It is another object of the present invention to provide a self-lubrication bearing, which lowers the dissipation rate of the applied lubricating oil.

To achieve these and other objects of the present invention, the self-lubrication bearing structure comprises a shaft of a motor, a bearing made from a porous material capable of absorbing and transferring a lubricating oil and having a center axle hole for the passing of the shaft of the motor and multiple oil retaining grooves that retain the applied lubricating oil, and a casing surrounding the bearing around the shaft of the motor. During rotation of the shaft, the lubricating oil is caused to move out of the bearing to lubricate the shaft. When the rotation of the shaft is stopped, the lubricating oil flows back to the oil retaining grooves.

Further, during rotation of the shaft of the motor to cause friction between the shaft and the bearing, the lubricating oil retained in the porous material of the bearing is caused to expand and to leaks out of the bearing toward the bearing and the shaft of the motor, and therefore the shaft is lubricated. At the same time, the internal wick structure of the bearing absorbs an equal amount of the lubricating oil from the oil retaining grooves to make up the deficiency. When the rotation of the shaft of the motor is stopped, the lubricating oil flows back to the oil retaining grooves. Therefore, the lubricating oil is recycled, lowering the dissipation rate of the lubricating oil.

### BRIEF DESCRIPTION OF THE DRAWINGS

FIG. 1 is a schematic sectional view of a motor equipped with a self-lubrication bearing structure at each of the two opposite sides thereof according to the present invention.
FIG. 2 is a sectional side view of a self-lubrication bearing structure in accordance with a first embodiment of the present invention.
FIG. 3 is a sectional side view of a self-lubrication bearing structure in accordance with a second embodiment of the present invention.
FIG. 4 is a sectional side view of a self-lubrication bearing structure in accordance with a third embodiment of the present invention.
FIG. 5 is a sectional side view of a self-lubrication bearing structure in accordance with a fourth embodiment of the present invention.
FIG. 6 is a sectional side view of a self-lubrication bearing structure in accordance with a fifth embodiment of the present invention.
FIG. 7 is a sectional side view of a self-lubrication bearing structure in accordance with a sixth embodiment of the present invention.

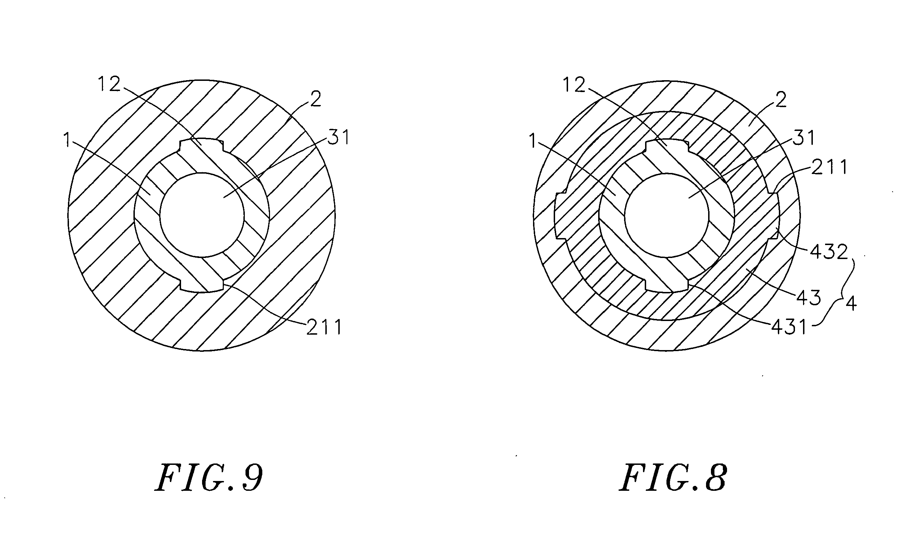

FIG. 8 is a sectional top view of a self-lubrication bearing structure in accordance with the sixth embodiment of the present invention.
FIG. 9 is a sectional bottom view of a self-lubrication bearing structure in accordance with the sixth embodiment of the present invention.
FIG. 10 is a sectional top view of a self-lubrication bearing structure in accordance with a seventh embodiment of the present invention.
FIG. 11 is a sectional bottom view of a self-lubrication bearing structure in accordance with the seventh embodiment of the present invention.

### DETAILED DESCRIPTION OF THE PREFERRED EMBODIMENT

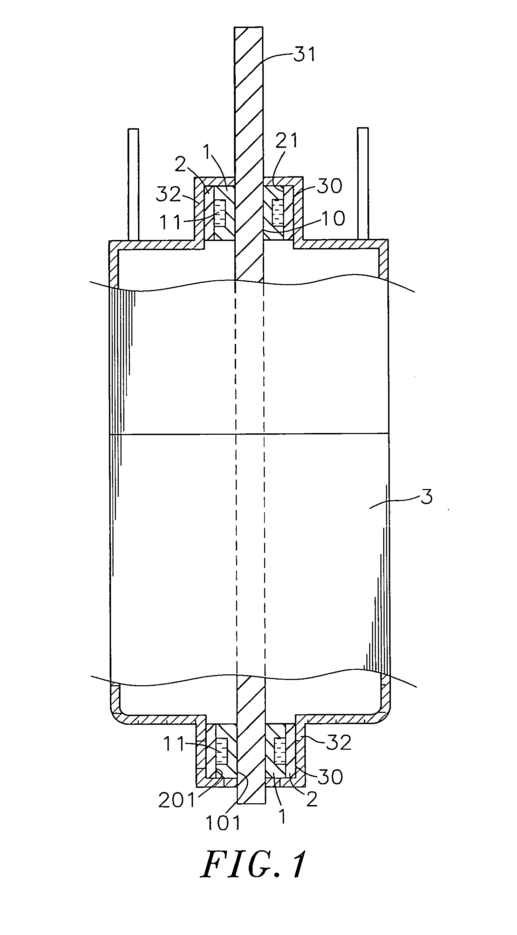

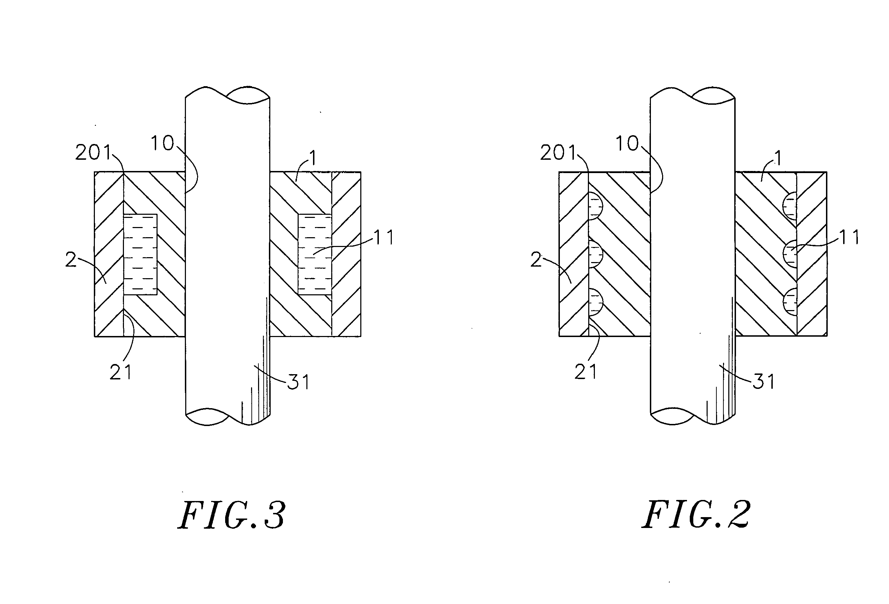

FIG. 1 is a schematic sectional view of a motor equipped with a self-lubrication bearing structure at each of the two opposite sides thereof according to the present invention. FIGS. 2∼4 respectively show self-lubrication bearing structures constructed according to first, second and third embodiments of the present invention. As shown in FIGS. 1∼4, a self-lubrication bearing structure according to the present invention is shown comprising a bearing **1,** a casing **2,** and a shaft **31** of a motor **3.**

The bearing **1** is made from a porous material (for example, ceramics), having a center axle hole **10** cut through the top and bottom sides, and at least one, for example, a plurality of oil retaining grooves **11** for retaining a certain amount of a lubricating oil.

The casing **2** is a hollow shell, defining an inside hole **21.**

The shaft **31** of the motor **3** has its two opposite ends respectively extended out of the motor **3,** and mounted with a respective seal cap **32.** The seal cap **32** defines an accommodation chamber **30** around the shaft **31.**

The bearing **1** is mounted in the inside hole **21** of the casing **2.** The center axle hole **10** of the bearing **1** is coupled to the shaft **31** of the motor **3.** The bearing **1** and the casing **2** are received in the accommodation chamber **30** in one seal cap **32** of the motor **3** in an enclosed status. When the shaft **31** of the motor **3** is rotating, the self-lubrication effect of the bearing **1** smoothens the rotation of the shaft **31.** Actually, two self-lubrication bearing structures are provided at two sides in the motor, i.e., two casings **2** are respectively sealed in the accommodation chambers **30** of the seal caps **32** at two sides of the motor **3** to hold a respective bearing **1,** allowing the two distal ends of the shaft **31** of the motor **3** to extend through the center axle holes **10** of the bearings **1.** After installation, the casings **2** and the bearings **1** are sealed inside the respective seal caps **32.** Therefore, the lubricating oil contained in the oil retaining grooves **11** will be forced out of the oil retaining grooves **11** to lubricate the shaft **31**, and will not escape out of the motor **3.** When the motor **3** is stopped, the lubricating oil will be guided back to the oil retaining grooves **11,** slowing down the speed of loss of the lubricating oil, improving the self-lubrication function of the bearing **1,** and prolonging the work life of the bearing **1.**

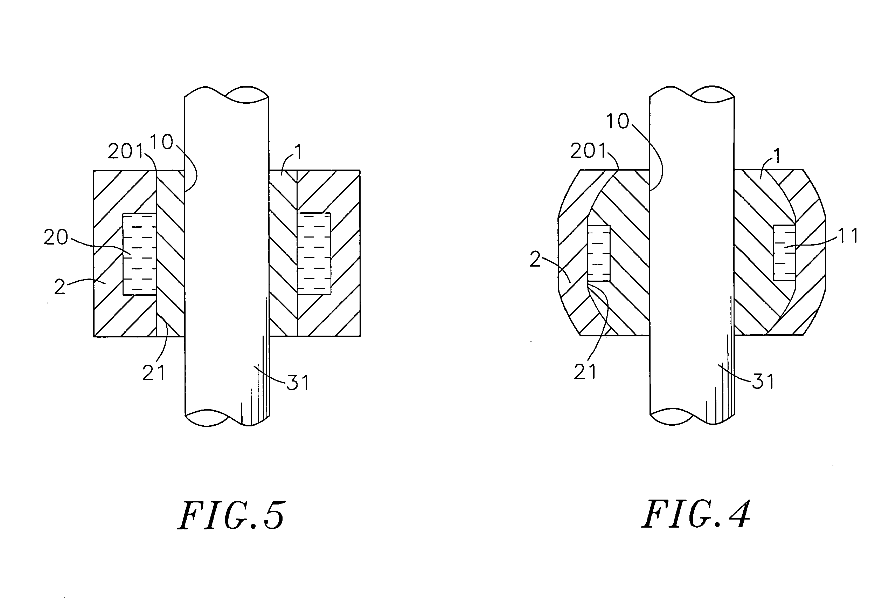

The aforesaid oil retaining grooves **11** can be formed on the outside wall of the bearing **1,** as shown in FIG. 2. Alternatively, the oil retaining grooves **11** can be formed on the inside wall of the bearing **1** in communication with the center axle hole **10,** as shown in FIGS. 3 and 4. Further, the inside wall of the bearing **1** can be a smoothly curved wall, or a wall providing a function of dynamic pressure. Further, as shown in FIG. 5, an oil retaining groove **20** can be formed in a contact interface **201** between the inside wall of the casing **2** and the outside wall of the bearing **1** for retaining the lubricating oil. During rotation of the shaft **31** in the bearing **1,** the internal wick structure of the bearing **1** absorbs the lubricating oil from the oil retaining groove **20** and transfers the lubricating oil to the inside wall of the bearing **1** and the outside wall of the shaft **31** in the center axle hole **10** to lubricate the shaft **31,** smoothening the rotation of the shaft **31.**

The oil retaining grooves **11** and **20** of the bearing **1** and the casing **2** are annular grooves extending around the inside wall and/or outside wall of the bearing **1** and the casing **2,** having a triangular, rhombic, polygonal, smoothly arched or U-shaped cross section. These oil retaining grooves **11** and **20** can be made having a same profile or different profiles effective for storing, retaining, recycling and supplying the lubricating oil.

During rotation of the shaft **31** of the motor **3** in the center axle hole **10** of the bearing **1,** friction or impact between the shaft **31** and the bearing **1** causes heat, thereby increasing the temperature and pressure of the bearing **1**. At this time, the lubrication oil is caused by the high temperature to expand and to flow out of the bearing **1.** The lubricating oil that flows out of the bearing **1** toward the inside of the center axle hole **10** provides a lubricating effect to the shaft **31** of the motor **3.** The lubricating oil that flows out of the bearing **1** in the reversed direction away from the center axle hole **10** moves toward the oil retaining grooves **11,** avoiding scattering and loss and eliminating the drawback of conventional bearing designs that are not in favor of lubricating oil refurnishing, storing and recycling.

When the lubrication oil flows out of the bearing **1** during rotation of the shaft **31,** the wick structure in the bearing **1** is partially changed into a vacuum status to produce a suction force sufficient to suck the lubricating oil from the oil retaining grooves **11,** thereby achieving self-lubrication of the bearing **1.** Therefore, the lubricating oil is recycling, keeping the shaft **31** constantly lubricated, lowing the dissipation rate of the lubricating oil, and effectively prolonging the work life of the bearing 1.

The oil retaining grooves **11** and **20** formed in the contact interface **201** between the inside wall of the casing **2** and the outside wall of the bearing **1** can be used to retain a liquid type lubricating oil or a semisolid grease. A contact interface **101** between the inside wall of the bearing **1** around the center axle hole 10 and the periphery of the shaft **31** of the motor **3** is the internal lubricating oil overflow face of the bearing **1.** By means of the functioning of the oil retaining grooves **11** to store, supply, recycle and retain the lubricating oil, the bearing **1** provides an excellent self-lubrication function. During operation, the major part of the lubricating oil that flows out of the bearing **1** is recycled to the oil retaining grooves **11,** and therefore the time in which the lubricating oil content is used up is greatly extended, prolonging the work life of the bearing **1.** Based on the method of estimating the work life of a bearing to be the time in which 50% of the oil content in the bearing **1** is used up, the lubricating oil recycling functioning of the present invention greatly prolongs the work life of the bearing **1.** Further, the total oil retaining capacity of the oil retaining grooves **11** can be several times over the amount of the lubricating oil retainable in the bearing **1.** Because the lubricating oil retained in the oil retaining grooves **11** can be recycled, the lubricating oil content in the bearing **1** is constantly kept at a high level for enabling the bearing **1** to function well for a long period of time.

Further, during rotation of the shaft **31** of the motor **3,** the contact interface **101** between the inside wall of the bearing **1** (the peripheral wall of the center axle hole **10)** and the periphery of the shaft **31** is caused to produce heat due to friction, and the high temperature of the bearing **1** causes the lubricating oil in the bearing **1** to expand and to leak into the contact interface **101** between the inside wall of the bearing **1** and the periphery of the shaft **31** for lubrication. When the lubricating oil is leaking out of the bearing **1** into the contact interface **101** between the inside wall of the bearing **1** and the periphery of the shaft **31,** the wick structure of the bearing **1** is partially changed into a vacuum status to suck the lubricating oil retained in the oil retaining grooves **11,** making up the deficiency. Further, the rotation of the shaft **31** of the motor **3** causes a pumping effect to cause movement of the lubricating oil. During movement of the lubricating oil, a part of the lubricating oil flows out of the bearing **1** to lubricate the shaft **31** of the motor **3** and another part of the lubricating oil flows out of the bearing **1** into the contact interface **201** between the casing **2** and the bearing **1** and then back to the oil retaining grooves **11** of the bearing **1.** When the shaft **31** of the motor **3** is stopped, the suction force of the wick structure of the bearing **1** and the aforesaid pumping effect disappear. At this time, the wick structure of the bearing **1** stops from sucking the lubricating oil from the oil retaining grooves **11** and the lubricating oil content in the bearing **1** is in full saturation. Therefore, the excessive amount of the lubricating oil in between the bearing **1** and the shaft **31** and in between the bearing **1** and the casing **2** flows back to the oil retaining grooves **11,** lowering the lubricating oil dissipation rate, prolonging the work life of the bearing **1** and smoothening the operation of the shaft 31 of the motor **3.**

Referring to FIGS. 1∼4 again, the bearing **1** is sleeved onto the shaft **31** of the motor **3** with its center axle hole **10** and fixedly mounted inside the inside hole **21** of the casing **2,** and then sealed by the associating seal cap **32.** The oil retaining grooves **11** can be formed partially in the outside wall of the bearing **1** and partially in the inside hole **20** of the casing **2** to store the lubricating oil, for enabling the lubricating oil to be sucked into the wick structure of the bearing **1** and applied to the periphery of the shaft **31** of the motor **3** for lubrication during rotation of the shaft **31** and then guided back to the oil retaining grooves **11** after stoppage of the rotary motion of the shaft **31.** Therefore, the invention greatly reduces the lubricating oil dissipation rate. Further, one or a number of oil retaining grooves **11** of one same profile or different profiles can be formed in the outside wall of the bearing **1** and/or in between the bearing **1** and the casing **2.** Further, to fit different environments of use, the bearing **1** and the casing **2** can be made having a ball-like, cylindrical or annular shape with the oil retaining grooves **11** formed in the outside wall of the bearing **1** and the center axle hole **10** axially extending through the center of the bearing **1** (see FIGS. 2∼5). During rotation of the shaft **31** of the motor **3,** the lubrication of the lubricating oil automatically adjusts the concentricity between the bearing **1** and the shaft **31,** smoothening the rotation of the shaft **31** in the bearing **1.**

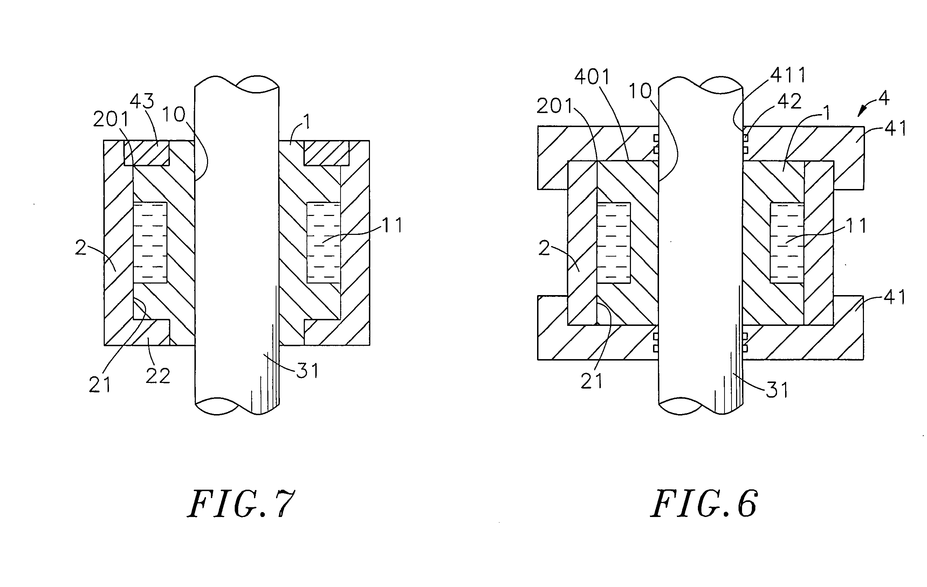

FIG. 6 is a sectional side view of a self-lubrication bearing structure in accordance with a fifth embodiment of the present invention. To avoid scattering of the lubricating oil out of the casing **2** when the lubricating oil is caused to expand due to a rise in temperature during rotation of the shaft **31,** an oil sealing device **4** is fastened to one or two opposite sides of the bearing **1** and the casing **2,** as shown in FIG. 6. This oil sealing device **4** prohibits the lubricating oil from escaping out of the area defined within the casing **2** through the contact interface **201** between the bearing **1** and the casing **2** or the contact interface **101** between the bearing **1** and the shaft **31** when the lubricating oil is caused to expand by a thermal energy during rotation of the shaft **31.**

Further, a thermal bonding glue or polymer adhesive may be applied to the contact area between the oil sealing device **4** and the bearing **1** and the casing **2** to enhance the lubricating oil sealing and retaining effects, avoiding scattering of the lubricating oil out of the casing **2** through the contact interface **201** between the bearing **1** and the casing **2** or the contact interface **101** between the bearing **1** and the shaft **31.** Alternatively, the oil sealing device **4** can be directly soldered to the bearing **1** and the casing **2.**

According to this fifth embodiment, the oil sealing device **4** is comprised of two seal caps **41** capped on the bearing **1** and the casing **2** at two opposite sides, and a thermal bonding glue or polymer adhesive is applied to a contact interface **401** between the bearing **1** and each seal cap **41**.By means of the seal caps **41** and the applied thermal bonding glue or polymer adhesive, the structural strength of the bearing **1** and the casing **2** is reinforced.

Further, according to the fifth embodiment of the present invention, as shown in FIG. 6, oil seal rings **42** are mounted in a contact interface **411** between the shaft **31** and the seal caps **41** at different elevations for sealing the lubricating oil in the area defined within the casing **2** and allowing release of internal pressure from the bearing **1** to the atmosphere gradually.

Further, as stated above, the casing **2** is made from a porous material having a more compact structure than the bearing **1** for retaining and transferring the applied lubricating oil, exhibiting an excellent lubricating effect.

FIGS. 7∼9 show a self-lubrication bearing structure in accordance a sixth embodiment of the present invention. According to this sixth embodiment, the bearing **1** has a plurality of locating lugs 12; the oil sealing device **4** is comprised of one seal cap **43** mounted in between the bearing **1** and the casing **2** at one side, namely, the top side, having a plurality of locating grooves **431** forced into engagement with the locating lugs **12** of the bearing **1** and a plurality of locating lugs **432;** the casing **2** has a plurality of locating grooves **211** respectively forced into engagement with the locating lugs **432** of the oil sealing device **4** and the locating lugs **12** of the axle bearing **1,** and a plurality of blocks **22** in the bottom side of the bearing **1** for applying with a thermal bonding glue or polymer adhesive to seal the contact area between the blocks **22** and the bearing **1.**

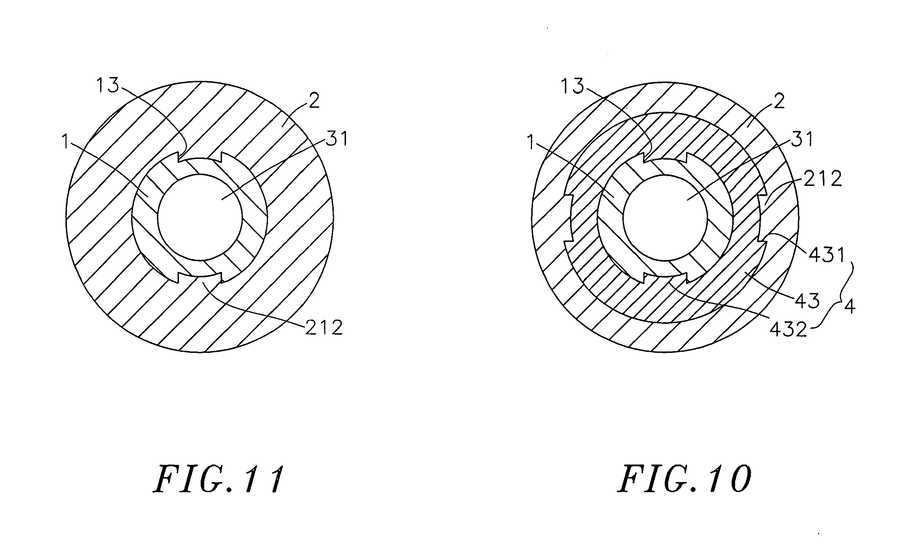

FIGS. 10 and 11 show a self-lubrication bearing structure in accordance a seventh embodiment of the present invention. This seventh embodiment is substantially similar to the aforesaid sixth embodiment with exception that the bearing **1** has a plurality of locating grooves **13;** the seal cap **43** has its locating grooves **431** and its locating lugs **432** forced into engagement with the locating grooves **13** of the bearing **1;** the casing **2** has a plurality of locating lugs **212** respectively forced into engagement with the locating grooves **13** of the bearing **1** and the locating grooves **431** of the seal cap **43** of the oil sealing device **4.**

The aforesaid lug and groove engagement design reinforces the structural strength of the assembly of the bearing **1,** casing **2** and oil sealing device **4,** enhancing the lubricating oil retaining effect.

In conclusion, the invention provides a self-lubrication bearing structure that has the following features and advantages:
1. The bearing **1** is made from a porous material, having oil retaining grooves **11** and a center axle hole **10.** By means of the center axle hole **10,** the bearing **1** is coupled to a shaft **31** of a motor **3.** During rotation of the shaft **31,** the bearing **1** exhibits an excellent self-lubrication effect, and therefore the work life of the bearing **1** is greatly prolonged.
2. The outside of the bearing **1** is sealed with a casing **2** and an oil sealing device **4,** and a contact interface **401** between the bearing **1** and the oil sealing device **4** is sealed with a thermal glue or polymer adhesive, reinforcing the structural strength and enhancing the lubricating oil sealing effect.
3. The bearing **1** is externally sealed with the casing **2** and the seal caps **41** of the oil sealing device **4,** and oil seal rings **42** are mounted in a contact interface **411** between the shaft **31** and the seal caps **41** at different elevations, and therefore leakage of the lubricating oil is prohibited.
4. The bearing **1** has locating lugs **12** for engagement with the locating grooves **211** of the casing **2** and the locating grooves **431** of the seal cap **43** of the oil sealing device **4,** or locating grooves **13** for engagement with the locating lugs **212** of the casing **2** and the locating grooves **432** of the seal cap **43** of the oil sealing device **4,** and therefore the structural strength of the assembly of the bearing **1,** the casing **2** and the oil sealing device **4** is reinforced.

Although particular embodiments of the invention have been described in detail for purposes of illustration, various modifications and enhancements may be made without departing from the spirit and scope of the invention. Accordingly, the invention is not to be limited except as by the appended claims.
1, Bearing
   10. Center axle hole
   101. Contact interface
   11. Oil retaining groove
   12. Locating lug
   13. Locating groove
2. Casing
   20. Oil retaining groove
   201. Contact interface
   21. Inside hole
   211. Locating groove
   212. Locating lug
   22. Block
3. Motor
   30. Accommodation chamber
   31. Shaft
   32. Seal cap
4. Oil sealing device
   401. Contact interface
   41. Seal cap
   411. Contact interface
   42. Oil seal ring
   43. Seal cap
   431. Locating groove
   432. Locating lug

## Claims

1. A self-lubrication bearing structure comprising a shaft of a motor, a bearing supporting said shaft and allowing rotation of said shaft relative to said bearing, a lubricating oil for lubricating said bearing and said shaft, and a casing supporting said bearing, wherein:
said bearing is made from a porous material capable of absorbing and transferring said lubricating oil, said bearing comprising a center axle hole surrounded by an inside wall thereof for the passing of said shaft and at least one oil retaining groove for retaining said lubricating oil;
said casing surrounds said bearing around said shaft, said casing defining therein an inside hole that accommodates said bearing;
said shaft is inserted through said center axle hole of said bearing and said inside hole of said casing and rotatably supported on the inside wall of said bearing.

2. The self-lubrication bearing structure as claimed in claim 1, wherein said at least one oil retaining groove is formed in said bearing.

3. The self-lubrication bearing structure as claimed in claim 1, wherein said at least one oil retaining groove is formed in an outside wall of said bearing.

4. The self-lubrication bearing structure as claimed in claim 1, wherein each said oil retaining groove has a rectangular cross section.

5. The self-lubrication bearing structure as claimed in claim 1, wherein each said oil retaining groove has a polygonal cross section.

6. The self-lubrication bearing structure as claimed in claim 1, wherein said lubricating oil is a liquid lubricating oil.

7. The self-lubrication bearing structure as claimed in claim 1, wherein said bearing has a cylindrical profile.

8. The self-lubrication bearing structure as claimed in claim 1, wherein said bearing has a ball-like profile.

9. The self-lubrication bearing structure as claimed in claim 1, wherein the inside wall of said bearing provides a function of dynamic pressure.

10. The self-lubrication bearing structure as claimed in claim 1, further comprising oil sealing means fastened to at least one of two opposite sides of said bearing.

11. The self-lubrication bearing structure as claimed in claim 1, further comprising a thermal polymer adhesive applied to said casing and said bearing to seal to seal a contact area between said bearing and said casing and to prevent leakage of said lubricating oil.

12. The self-lubrication bearing structure as claimed in claim 1, wherein said casing comprises a plurality of transversely extending bottom blocks respectively attached to two opposite sides of said bearing, and a thermal polymer adhesive applied to said casing and said bearing to seal a contact area between said bearing and said bottom blocks and to prevent leakage of said lubricating oil.

13. The self-lubrication bearing structure as claimed in claim 1, further comprising two seal caps capped on said casing and said bearing at two opposite sides around said shaft, and a thermal polymer adhesive applied to said seal caps and said casing and said bearing to seal a contact area between said seal caps and said bearing and a contact area between said seal caps and said casing and to prevent leakage of said lubricating oil.

14. The self-lubrication bearing structure as claimed in claim 1, further comprising at least one seal cap capped on said casing and said bearing around said shaft, and a plurality of oil seal rings respectively mounted in between said at least one seal cap and the periphery of said shaft at different elevations to prevent leakage of said lubricating oil.

15. The self-lubrication bearing structure as claimed in claim 9, wherein said casing is made from a porous material and comprises a plurality of locating lugs and a plurality of locating grooves; each said seal cap comprises a plurality of locating lugs and a plurality of locating grooves, said locating grooves/lugs of each said seal cap being forced into engagement with said locating lugs/grooves of said casing; said bearing comprises a plurality of locating grooves/lugs respectively forced into engagement with said locating lugs/grooves of said casing and said locating lugs/grooves of said seal cap.
